# EUROPEAN PATENT APPLICATION

(11) **EP 0 589 616 A1**
(43) Date of publication of application: **30.03.1994**
(21) Application number: 93307284.5
(22) Date of filing: 15.09.1993
(51) Int. Cl.: F16L 11/08

(54) **Hoses incorporating circular woven reinforcement**

(30) Priority: 24.09.1992 GB 9220152
(71) Applicant: ANGUS FIRE ARMOUR LIMITED, Thame, Oxfordshire OX9 3RT (GB)
(72) Inventor: Sheard, Dennis Richard, York YO5 8JR (GB)
(74) Representative: Brooke-Smith, Fred

(57) **Abstract**

A hose capable of withstanding very high tensile loadings and internal pressures is made from a plastics, rubber or elastomeric material having in its wall a circular woven reinforcing jacket. The jacket is composed of multifilament warp yarns (11), multifilament weft yarns (12a, 12b) which are not interwoven with the warp yarns, and binder yarns or monofilaments (13) binding the warp and weft yarns together. The warp and weft yarns are substantially uncrimped, i.e. the percentage crimp of both the warp and weft yarns is not more than 50% of the extension at break value of the yarns.

## Description

This invention relates to hoses incorporating circular woven reinforcement, and is more particularly concerned with hoses required to withstand very high tensile loadings and internal pressures.

Hoses having a lining and optionally an outer cover made from plastic, thermoplastic elastomeric or rubber materials and incorporating a braided or woven reinforcement are finding increasing use for fluid conveyance because they can be produced in very long lengths, while steel pipes can be handled and transported only in short lengths and have to be bolted or welded together. Such hoses are produced in both lay-flat and "solid" types, of which the latter do not flatten when coiled and are thereby disadvantageous in requiring much higher packing space during storage and transport. Such hoses may, for example be made by an extrusion process which provides both the lining and cover in one extrusion operation.

Hitherto, the multifilament warp and weft yarns of tubular reinforcing jackets of hoses have been interwoven, the strength of the tubular woven jacket being mainly dependent on the density of yarns in the reinforcing jacket and the material, the number of yarns per centimetre of jacket, ply and strength of the filaments in the yarns, but also on the strength conversion efficiency from yarn to jacket. This factor is lessened by the degree of crimping.of the yarns resulting from weaving.

Weaving crimp in the yarns reduces the strength conversion efficiency first because it imposes unequal tension and extension on the filaments and yarns in the unstressed jacket, and secondly because it is difficult to ensure that the weaving loom will feed all the yarns at exactly the same degree of crimp.

Yarns break when the stress causes extension to reach the "Extension at Break" value for the particular type of yarn used. For a typical high tenacity polyester yarn, this value is about 15%, but for aramid yarn it is only about 4%. Hose breakage under tensile load, or burst under hydraulic pressure occurs when the warp or weft yarns respectively are extended to their break extension value. 100% strength conversion arises only if all the warp or weft yarns reach the break extension value together when the hose is stressed. This cannot arise if the weaving crimp is variable among the warp or weft yarns. High losses in strength conversion efficiency will clearly result if the extension of either individual filaments or of yarns in the jacket due to weaving crimp is high in relation to the extension at break of the yarns comprising it, since there will then be unequal load-sharing when the jacket is stressed by tension or pressure.

In designing jackets having very high tensile and hydraulic strengths, high yarn densities are required, but if the thickness and packing densities of yarns is increased in order to secure greater strength, the crowding of the yarns leads to increased crimping so that the differential crimping effect in the yarn is also increased. Consequently the strength conversion efficiency falls sharply with further increases in yarn density. Ultimately, a point is reached where adding further yarn leads to lower jacket strength, thus imposing a limit on jacket strength for a given hose diameter.

The invention seeks to overcome this barrier and to provide a hose having greater tensile strength in a lengthwise direction or able to withstand high bursting stresses, or both.

According to this invention there is provided a hose made from a plastics, elastomeric or rubber material and incorporating in its wall a circular woven reinforcement jacket composed of multifilament warp yarns, multifilament weft yarns which are not interwoven with the warp yarns, and binder yarns or monofilaments binding the warp and weft yarns together, said multifilament warp and weft yarns being substantially uncrimped as herein defined.

By the term multifilament yarns, we mean yarns of high decitex made by twisting or plying fibres or yarns comprising textile filaments, staple fibres or both. Said yarns may be used in either or both of warp and weft.

The binder yarns may be of similar nature, or may be monofilament, and are of decitex not greater than about 1/5 of that of the multifilament yarns comprising the said warps or wefts.

Crimp can be measured by cutting, say a 10cm. square section from the jacket, extracting the individual yarns, and measuring their length when tensioned under a small load, sufficient to straighten the yarns, but not extend them appreciably. The increases in length caused by crimp removal can be expressed as a percentage of the 10cm. length of the warp and weft yarns in the woven jacket.

By the term "substantially uncrimped" we mean that the percentage crimp for both warp and weft yarns is not more than 50% of the extension at break value of the yarns. This means that, for example, for a yarn having an extension at break value of 16%, the percentage crimp would not exceed 8%. It is preferred that the percentage crimp should not exceed 25% of the extension at break value.

Preferably the binder yarns are low decitex yarns.

Conveniently the binder yarns are warp yarns.

In one preferred construction according to the invention a proportion of said multifilament weft yarns are disposed radially inward of said warp yarns and the remainder of said multifilament weft yarns are disposed radially outward of said multifilament warp yarns, the said warp binder yarns being an inverse integral fraction (e.g. 1 in 2, 1 in 3 etc.) of the said multifilament warp yarns in regular repeating sequence.

The invention will now be described in more detail with reference by way of examples to the accompanying diagrammatic drawing of a form of circular woven reinforcing jacket for a hose according to the invention.

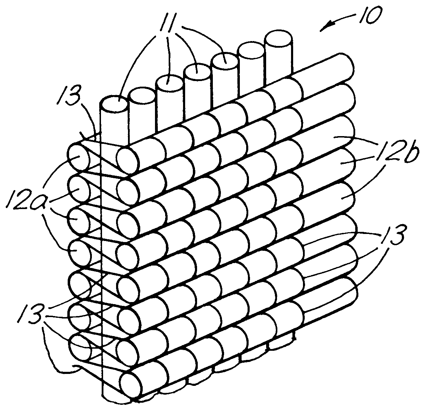

Referring to the drawing, the jacket 10 comprises multifilament warp yarns 11, inner and outer multifilament weft yarns 12a, 12b respectively which are not interwoven with the warp yarns, and binder yarns or monofilaments 13 which are woven with the multifilament warp and weft yarns to bind them together. The multifilament warp and weft yarns may for example have a decitex value of 20,000 and the binder yarns may have a much lower decitex value e.g. 2000. The decitex value of the multifilament warp and weft yarns is preferably at least 5000, and that of the binder yarns is preferably not greater than about 3000. The decitex value is defined as the weight in grams of 10,000 metres of the yarn.

In this particular construction binder yarns alternate with multifilament warp yarns, and no binder yarns are provided extending in the weft direction.

This tubular jacket was woven on a circular loom having two shuttles containing multifilament weft packages, and warp yarns comprising alternating multifilament yarns and binder yarns, the warp lifting mechanism of the loom producing a shed reversal between each of the two shuttles. Since there is a shed change between each shuttle passage, it was to be expected that one weft yarn would tend to remain essentially inside all the warps and that the other weft yarn would tend to remain outside all the warps, but it was a matter for surprise that the binder yarns entered the loom almost twice as fast as the multifilament yarns and had about 70% crimp, whereas the multifilament warp yarns were virtually straight and crimp-free and the multifilament weft yarns were also substantially uncrimped as defined above.

The circular looms used to make the textile reinforcements of our invention, may contain 2 or more shuttles, (typical circular looms contain 2,3,4,6, or 8 shuttles).

It is obviously necessary to arrange the warp shed changing mechanism so that the high decitex weft yarns from any shuttle do not cross over and weave with the high decitex warp yarns, and that weaving and yarn cross-over is restricted to the binder yarns. These conditions can be readily achieved by suitable arrangement of the shed changing mechanism.

If the resulting tubular jacket is too stiff, correction can easily be made by removing each alternate binder warp from the loom, leaving empty comb gaps in the loom. The proportion of binders can be reduced further if desired, subject to adequate firmness and stability in the tubular jacket.

To complete the manufacture of the hose, the jacket is provided with an inner lining of a plastics or elastomeric material, e.g. a vulcanising rubber or a thermoplastic elastomer such as poly (ester-ether) or polyurethane. An external cover or coating can optionally be provided. Preferably the hose is made by providing both an internal lining and an external coating of the elastomers by a known extrusion process. Such hoses may be vulcanised, using superheated steam, or may be subjected to steaming treatment to improve their properties without increasing crimp in the load-bearing yarns.

In the particular case in which warp binder yarns are used, it may be advantageous to substitute short sequences of multifilament warp yarns in two diametrically opposed positions in the circular woven fabric, by low decitex, e.g. binder yarns thus providing diametrically opposing sections containing only low decitex warp yarns.

In such sections, the weft yarns occupy essentially the same diameter as each other (in contrast to lines 5 - 7, page 5), providing easier folding of the jackets and hoses in the longitudinal direction, and a natural crease or lay-flat fold line along the length of the hoses.

Such easier folding results in easier coiling and allows the stiff hoses to be coiled more easily and in coils or reels of lower diameters.

Even more stable reinforcing jackets can be made by the alternative method of controlling the warp lifting mechanism to weave 2, 3 or more multifilament yarns for each binder yarn, using the full capacity of comb gaps, instead of having empty gaps, so as to provide a higher number of multifilament warps. This construction can readily be achieved on looms of the type incorporating a lifting mechanism operated by a selector wheel, as used in looms such as those manufactured by MANDAL's REVERBANE of Mandal, Norway provided that the sequences of high and low positions in the shed are correctly chosen and are correctly related to the total number of comb gaps. These loom operating factors are easily determined by those skilled in the art.

In the foregoing, the binder yarns are used only in the warp, but they may instead be used in the weft. In the simplest textile construction, the tubular jacket would incorporate a spiral of multifilament yarns with alternating multifilament warp yarns inside and outside the spiral, and a second spiral of binder weft yarns laid within the spiral of multifilament yarns, these binder yarns binding the multifilament warps to the multifilament weft spiral. This would necessitate a loom having at least two shuttle and weft packages, said shuttles containing the multifilament yarn and the binder yarn respectively. In practice the resulting weight imbalance would necessitate slow operation of the loom. Four shuttles would obviate the imbalance but would necessitate a complex shed lifting mechanism, and it would be preferable to employ a loom incorporating a selector wheel system.

It will be further understood that the use of binder yarns in both the warp and the weft is possible and this further increases the dimensional stability of the tubular jacket.

By example, lay-flat hoses incorporating reinforcing jackets are currently used to pump water from underground wells about 200 metres in depth, an electrical submersible pump being mounted on the lower end of the pipe. The arrangement operates very efficiently since when the pump needs maintenance, the tube can be wound on to a reel, thus avoiding the need to uncouple numerous lengths of pipe, which is the procedure when steel pipe is used.

In the case of current hoses of 6'' diameter, using conventional plainweave or twill weaving constructions made from polyester yarns, the maximum tensile strength obtainable for the hoses is about 20 tonnes, and the maximum burst strength is about 60 bar. This limits the operating depth to wells of about 200 m.

The use of reinforcing jackets according to the present invention, and using the same yarn materials, enables similar 6'' hoses to be designed to appreciably higher tensile strengths and burst pressures approaching 30 tonnes and 90 bar respectively, thus extending the operating depth to about 300 m.

Comparable increases in performance become increasingly evident in the case of hoses exceeding 6'' in diameter.

## Claims

1. A hose made from a plastics, elastomeric or rubber material and incorporating in its wall a circular woven jacket composed of multifilament warp yarns, multifilament weft yarns which are not interwoven with the warp yarns, and binder yarns or monofilaments binding the warp and weft yarns together, said multifilament warp and weft yarns being substantially uncrimped as hereinbefore defined.

2. A hose as claimed in claim 1, wherein the binder yarns have a decitex value not greater than about 3500, and that of the multifilament yarns is at least 5 times as great as that of the binder yarns.

3. A hose as claimed in claim 1 or claim 2, wherein at least some of the binder yarns are warp yarns.

4. A hose as claimed in claim 1 or claim 2, wherein at least some of the binder yarns are weft yarns.

5. A hose as claimed in claim 1 or claim 2, wherein both the warp and weft contain binder yarns or monofilaments.

6. A hose as claimed in any one of claims 1, 2, 3 or 5 wherein two diametrically opposite warp sections of the jacket have, instead of the multifilament warp yarns, low decitex binder yarns sufficient in number to provide natural longitudinal fold lines in the tubular jacket and hose.

7. A hose as claimed in any one of claims 1, 2, 3, 5 and 6, wherein a proportion of said multifilament weft yarns are disposed radially inward of said warp yarns and the remainder of said multifilament weft yarns are disposed radially outward of said multifilament warp yarns.

8. A hose as claimed in any one of claims 1, 2, 4, 5 and 6, wherein a proportion of the multifilament warp yarns are disposed radially inward of the multifilament weft yarns and the remainder of the multifilament warp yarns are disposed radially outward of the multifilament weft yarns.
